# EUROPEAN PATENT APPLICATION

(11) **EP 3 075 981 A1**
(43) Date of publication of application: **05.10.2016**
(21) Application number: 14836453.2
(22) Date of filing: 13.08.2014
(51) Int. Cl.: F02C 3/00, F02C 3/067, F02C 7/28, F02K 3/072

(54) **AXIAL TURBOMACHINES WITH ROTARY HOUSING AND FIXED CENTRAL ELEMENT**

(30) Priority: 16.08.2013 BR 102013021427
(71) Applicant: Milani, Paulo Giacomo, 12243-110 São José dos Camos - SP (BR); Bambace, Luis Antonio Waack, 12242-222 São José dos Campos - SP (BR); Guedes, Ulisses Tadeu Vieira, 1224-240 São José dos Camos - SP (BR)
(72) Inventor: Milani, Paulo Giacomo, 12243-110 São José dos Camos - SP (BR); Bambace, Luis Antonio Waack, 12242-222 São José dos Campos - SP (BR); Guedes, Ulisses Tadeu Vieira, 1224-240 São José dos Camos - SP (BR)
(74) Representative: Algemeen Octrooi- en Merkenbureau B.V.
(86) International application number: PCT/BR2014/000283
(87) International publication number: WO 2015/021522

(57) **Abstract**

The invention is characterized by a rotary external housing and the attachment of the movable blades inside said housing, and by the attachment of the fixed (or static) blades to a shaft or other immovable central element, irrespective of whether compression and expansion occur in one or more stages. The proposed attachment eliminates radial play in the region that transfers maximum energy to the fluid, thereby drastically reducing the problems due to stalling at the boundary layer. In this way, there is no drop in the mechanical performance of small axial turbines and compressors with a less favourable ratio of radial play to diameter, an aspect that has prevented more generalized use thereof. The fixed blades, by not transferring energy to the fluid and decelerating the rotation thereof, encounter fewer stalling problems than the movable blades.

## Description

The Aeronautical turbo-engine uses axial compressor and expanding turbine that have high mechanical efficiencies in compression and energy recovery of over 90% against efficiencies in compression of 88% of reciprocating cylinders and 60 to 70% of radial gas compressors. It only achieves such efficiencies due to its relatively high size, that allows small ratios of the clearance between moving vanes and the housing diameter. Even so the large sized turbines have, in some cases, risks of flow detachment in transients, specially in accelerations and require a lot of caution in this issue. In cars, turbo-compressors are radial precisely because they are small and the above mentioned ratio is unfavorable. Yet, in the axial design, the boundary layer detachment starts to happen at the turbine tips when the ratio of clearance (gap) over diameter increases, and the efficiencies become unsatisfactory even in smaller radial configurations, mainly because the ratio of the momenta of the gap return flow and the main flow grows with proportionally smaller clearances. The generalization of axial design for other usages has very large impacts in solar energy generation, motors vehicles (specially in hybrid vehicles where the engine drives only an electric generator and may be replaced without impacts to the vehicle braking by a turbine engine), energy co generation, among others. The proposed solution, also addresses the problem of NOx production in the case of turbine engines and gas turbines, to be presented later on.

The proposed solution uses the inventive principle of *inversion,* immediately suggested by the TRIZ contradiction matrix technique, with the item to eliminate as the efficiency loss and the size or volume as control variables. This is the same method that solved the sealing problems in the Wankel engine and led to the issue of the Veselovisky engine, where the spinning part attached to an eccentric is the oval, and the chamber is triangular with rounded edges.

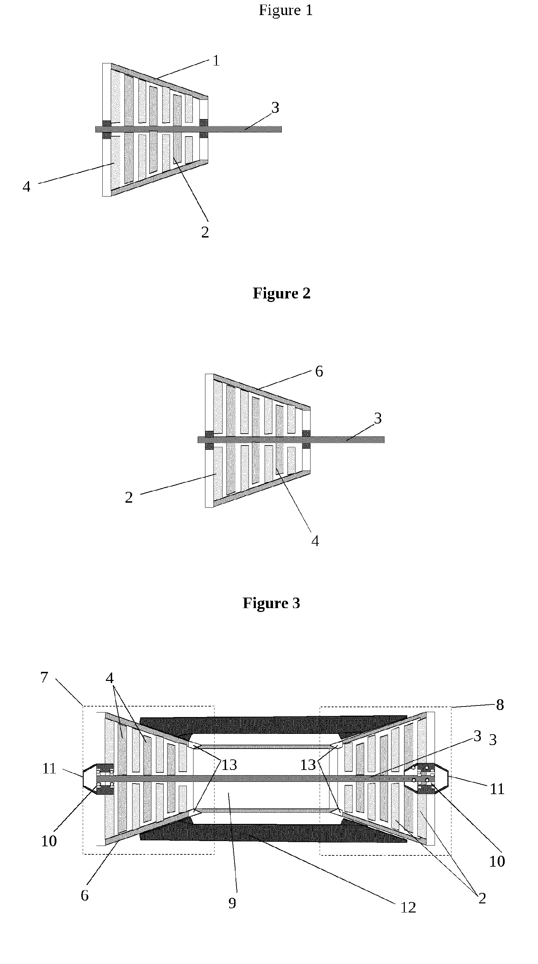

Compressor systems and conventional turbines (1) have moving vanes (2) attached to an spinning axis (3), stationary vanes (4) attached to a stationary housing (5), as shown in figure 1. When they are part of a turbine engine, part of the air goes to the combustion chamber and another part goes to cool it's walls and there is generation of NOx when this air joins with the hot burned gases because the oxygen reacts with the nitrogen if the temperature is higher than 1500°C. Many solutions have been tried to solve the boundary layer detachment at the blades tips but the here proposed inversion was not used.

Even in turbines relatively large the clearances are important. The fluctuations in temperature and the variations in relative thermal expansions between the housing and the moving blade systems generate fluctuations of clearances (gaps) that may create the contact or exaggerated clearance. This way the clearance active control either injecting cold air or hot gas into the housing that envelopes the compressor, or with the heat of the lubricating oil, the exhausting gas flow or even plasma, that causes thermal expansion or contraction of the elements that control the clearance in order to reduce it, as can be seen in many patents. US4928240; US6363708; US6363708; EP2208862A2; EP2208861A; EP1696103B1; EP0481149A1; EP0330492B1; EP0330492B1. Another solution was the use of a system of very thin plates with many flexible internal elements that deform easily, reducing the wearing in case the contact of the moving blade and this enveloping housing element for the blades system of the turbine or the compressor, as in the patent EP718218B1. Another idea was assembling inside the enveloping housing for the blade system, a structure similar to a tooth brush that has flexibility and restricts the flow as well, what has been presented in the patents US20050179207A1 and WO2001025598A1, now with a super flexible membrane at the tip of the brushes, eventually touching the moving blades. Note that the regularly spaced ultra-thin disks could make the same role and there aren't patents related to them. It is interesting that the US patent does not specify if the brush detailed in it is at the moving blade or at the fixed vane. The WO mentioned specifies that it is at the moving blade.

A similar idea is to use the tips of the moving blades, curved in the tangential direction that, although they are thin, they would accommodate in case of contact and would reduce the friction and wearing as well, as in the patent EP1126233A3. The curvature of the moving blade of this patent generates a high flexibility and this way, the system is designed to practically work in contact, having clearances due to straightness or flatness, only. Another work line is to use axis-symmetrical grooves. This way the wall decreases less the speed of the gas rotation movement, reducing the actual angle of attack between the gas and the blades or vanes. These grooves were initially perpendicular to the axis. Later there showed up systems with angled and straight or curved grooves. In this direction many patents were made among which WO2006043987 and US7766614. In another direction there is the use of special shapes at the blades and vanes tips to overcome problems with the angles of attack induced by the interaction of the fluid with the wall. Other than that there are mixed solutions. In the case that a conventional turbine were built with the roots of the vanes or with lesser curbing effect by variations of it's trailing angles and the fixed vanes curbing less the fluid rotation close to the wall, the combined effect of curbing close to the wall generates a final rotation closer to that in a wall without friction, making it easier the design of the moving blades. In the proposed system, the greater clearance between the fixed vane and the wall implies only that the vane curbs less the flow, something that can be compensated by extra curbing via change of the vane trailing edge angle, increasing the distance between vanes and blades and mixing effects. It has been used as a means to improve performance the blades internal flow, of the gas that is released at the tips, close and inside the clearance and in it's expansion, blocks the main flow of gases through the gap. The patent EP0597440A1, uses fixed vanes of variable angle of attack in the entrance section of the turbine engine to control the boundary layer detachment and sketches the idea of the use of this technique in more than one section. The use of a shroud at the tip of the fixed vanes, assembled in a recess in the housing, was also cogitated. Completing the system, there are valves of active control and bleeding systems as in the EP1013937B1. There are also small transverse fins in the moving blade that preclude that the perturbations of blade tips propagate in the direction of the central zone of the blade, since sometimes there are more than a row of block fins. Another interesting fact is that, in the case of aeronautical engines, the use of an external blade system that receives torque from the aerodynamic flow over the aircraft, eliminates the need of the turbine, moving the compressor with this torque and the burned gases generate thrust by the output nozzle. In this case, the absence of an axis crossing the combustion chamber, eliminates the transient differential thermal expansion clearance problems, in which the outer region of the bearing and the shaft heat or cool differently in transients. Without having to assure a clearance increase to overcome small misalignments and shaft oscillations in these transients, the compressor clearance may be reduced and the efficiency enhanced, compensating for different aircraft, in special cruising missiles and unmanned aircraft for observation, the same effect obtained with propeller use. Among the hypothesis relative to the causes of tip stall is the blocking of the compressor return flow in the gap, a phenomena where the flow rate reaches a limit value that is independent of the pressure, generating perturbations that propagate by the blades, eliminating its efficiency. The patents related to the use of brushes, WO 01/25598A1, an original patent for a Canadian turbine manufacturer, is one of the documents that points to this phenomena. The bigger the return flow that is submitted to blockage, the worse the performance is. In our view, when the return flow migrates to more internal regions, the angular momentum conservation accelerates the return flow and the perturbations, in the case of the proposed inversion, the angular momentum conservation has the opposite effect, curbing the return flow. The increase in the angular speed due to angular momentum conservation generates pressure reductions that change even more the flow in other zones and tend to disseminate the perturbations generated by the tip stall, in a more critical way than pressure increases due to the speed reductions associated with the angular momentum conservation that tends to reduce the propagation of the effects of the perturbations generated by the tip stall. As the fixed vanes doesn't have a pressure gradient opposite to the main flow there are less problems in them and, in addition, changes in their angles may minimize any effect in these vanes. In the US20070248457, high thermal expansion soft polymeric material elements are used to control the clearance, in it the initial compression level overcomes the wearing, allowing an acceptable time between maintenance without clearances. In the US5297930 from 1991, a very long fixed vane is used in the entrance to reduce to the maximum any rotation of the entrance flow and to reduce the stall chance. Some European patents as EP1013937B1 and EP0777828 suck the return flow through the wall to avoid the stall.

In the proposed solution, figure 2, the axis (3) is fixed or static and serves as a fixing point for the fixed vanes (4), while the moving blades (2) are fixed to the spinning housing (6), that may or may be not the external housing. This arrangement makes the external radial clearance of moving blades equal to zero, in the place were most of the energy is transferred to the fluid. For identical clearances the area available to the gas flow is smaller if the gap is near the turbine or compressor axis. So, in passing the radial clearance of a moving blade to the central zone generates smaller flows between the blades and the wall. At the airplane wings there are parasite flows perpendicular to the airplane velocity, that are due to the search of the least resistance path by the air, and there are similar flows at the blades and vanes of turbines and compressors. These parasite flow perpendicular to the turbine or compressor axis is more difficult to occur due to the smaller distance between the blades or vanes and the bigger iteration between the parasite flow of different blades or vanes. There is also the tendency of tangential acceleration to keep the angular momentum and its effects. Thus, the angular momentum conservation tends to overcome the curbing at the axis wall, and in this configuration the boundary layer detachment does not occur or is almost innocuous. Clearances in the fixed vanes also shows up, vanes in which does not have pressure gradients opposite to the (main) flow direction even in the case of the compressor and, thanks to this, the absence of serious problems of boundary layer detachment in the new configuration and where the aerodynamic adjustments are much easier. It shall be noticed that larger clearances imply in a smaller iteration with the fluid at the tip region and smaller relative tangential speed between the flow and the fixed vane tip. The smaller iteration extracts less energy of the fluid in that zone and, the homogenization relative to the increase of the distance between the fixed vanes may be used to homogenize the speeds. The turbines fixed vanes have the function of reducing the flow spin to increase the efficiency of fixed vanes and do not transfer energy from the flow to the turbine engine axis. Clearances in these vanes only causes the reduction of the flow spin in external zone to be smaller than that of a system without a clearance. Since the increase of the final twisting of the fixed vanes may bring the values below the ideal tangential speed to the final zone of the vane without a clearance, and as the friction between the gas layers in different radial positions tends to homogenize the speed, it is easier to overcome the effects of clearances in the fixed vanes, since clearances in these vanes are not so harmful. Due to that, in the simplest version of the AXIAL TURBOMACHINES WITH ROTARY HOUSING AND FIXED CENTRAL ELEMENT shape adjustments of the fixed vanes in the zone close to the (spinning) housing and to the moving blades at the zone near the fixed axis, to avoid any boundary layer detachment due to inappropriate attack angle in the moving blade and assure the system efficiency.

In addition there is no citation at all of the use of protection solutions of the moving blades, with respect to the fixed vanes. All documents are categorical in mentioning its uses only in fixed vanes, except the US20050179207A1, that does not mention where the brushes are. Thus, grooves in the spinning housing, twisted design of the tips, tips curvatures, blocking fins and other items may reduce the problems of boundary layer detachment and turbulence in the fixed vanes. As there is a second use of brushes patented and, nothing relative to flexible rings, such rings may be used in blades tips and brushes with membranes similar to the patent WO2001025598A1. This proposed inversion between spinning elements and neither spinning nor critical elements, axis and housing, assures a smaller sensitivity to size reduction and less favorable clearance ratios in comparison with traditional designs. The fact of the fixed vane being passive make it less sensitive to problems than the moving blades.

In turbine engines, the external cooling air has a larger translational relative speed than the internal air and, this increases the heat transfer coefficient of external zone with respect to the internal one, where the air tends to spin together with the blades in the moving blades zone and, thus, with an angular speed that is equal to the spinning housing, and have reduction of angular speed at the fixed vanes. As the wall is made of a thin sheet and the Biot number is low, then the wall temperature is closer to that of the cooling air. The curbing of the external air that would be done by the walls of a stationary housing doesn't exist any more and a curbing of the internal air starts, which with a smaller gap between the combustion chamber and the external wall, dissipates more energy. But the related energy is relatively small in both cases compared to other process items.

Keeping itself colder, the combustion chamber wall will have a bigger mechanical resistance. This helps the system to keep higher pressure differentials between the combustion chamber and the external zone. This way it is possible to have an initial compressor stage over the entire air admitted to the compressor (8), separating at it's output the cooling air from the other that goes to the combustion chamber (9) in one or more additional steps. This enables an initial expansion of the burned gases in the turbine (7) what reduces their temperature before these burned gases are mixed to the cold air. This enables high burn temperatures and high efficiencies without NOx formation since the expansion of the burned gas before mixing with cold air is able to reduce the temperature of the burned gases to values compatible with the elimination of the formation of NOx. To reduce the temperature of the gas in contact with the part of the turbine where there is expansion of only burned gases, it is possible to accelerate these gases with an appropriate nozzle so as to transform part of this heat in kinetic energy. Other than that, it is possible to use more aggressive blade cooling methods for this part of the turbine. This action enables the increase in efficiency of the turbine. The conventional turbine, with the Bryton cycle, has an efficiency equal the Carnot cycle with a cold source temperature equaling the gases outlet temperature. Turbines with bleeding have different cycles, with a loss of efficiency with equal pressure and final temperature, but due to an increase in these parameters it will be far more efficient than conventional turbines, which are limited in temperature due to its NOx formation. In the case of stationary gas turbines, their efficiencies are near 40%, in the case of the turbine with this bleeding, it is possible to reach 60%.

Figure 3 shows a turbine engine with a spinning housing (6) where the turbine (7) and the compressor (8) and the combustion chamber (9) are all a single mechanical part, that transfer the turbine torque to the compressor. In this mounting the spinning housing is held in place by bearings, rolling bearings are the preferred type, that are held by the fixed axis (3) and the moving blades (2) of the rolling bearing section are held by the hub (11) where the rolling bearings are mounted to, in an arrangement that protects them from the heat. The external housing (12) of the cooling air annulus is stationary, and the spinning housing (6) confine this air, which flows from the compressor to it or from it to the turbine by several paths (13), the sealing zone between it and the turbine spinning housing may receive labyrinth gaskets, brushes, shielded bearings or another device and is dimensioned to the minimum leakage and to low friction. Despite that it is easier to manufacture and control leakages in a single set in which the cooling air confining wall also spins, the proposed configuration is advantageous, even though it is optional, as it increases the heat transfer coefficient of the cooling air with the combustion chamber walls. This brings the combustion chamber wall temperature to a value closer to that of the cooling air in a given section than it would be if the external wall of the confining housing also rotated at same speed. Alternatively, it would be possible to work with all parts in the same angular speed with the use of convergence to reduce the flow transverse section and to use higher axial speeds in the cooling zone than inside the combustion chamber, with a section increase near the output. In this case, some gasket or device between the external housing (12) of cooling zone is necessary, as this housing is rigidly assembled to the spinning housing (6) of the turbine, combustion chamber and compressor. The reductions of wall temperature, energy losses and NOx generation will define the best option. Note that, in case of bigger turbulence of the cooling air and burned gases eventually the NOx formation is reduced since the temperatures fall more rapidly in this case, and the available time for this pollutant formation is smaller. Note, also, that the drop in the relative cooling air flow rate reduction raises the entrance temperature in the turbine and the respective efficiency.

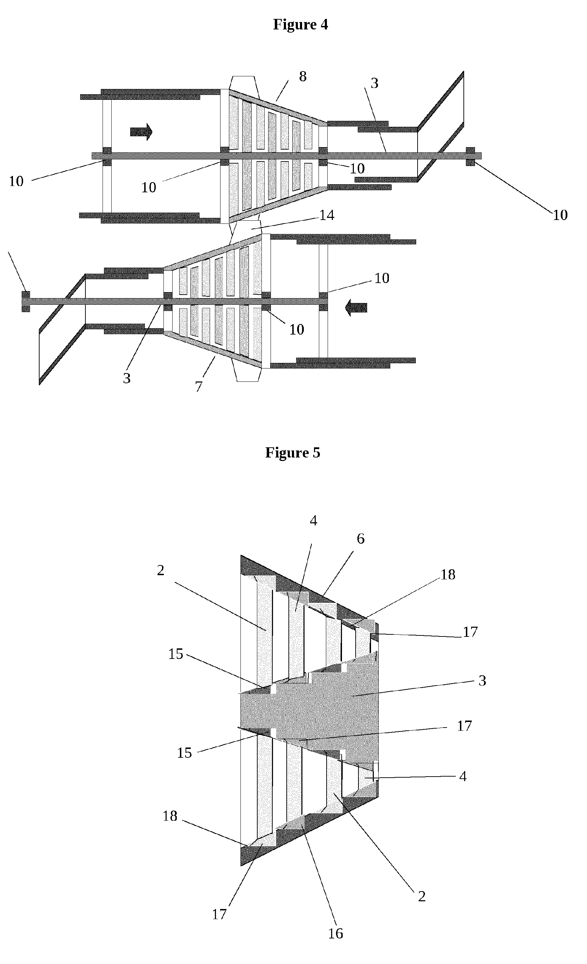

Figure 4 shows a turbo-compressor set for normal vehicles, with axial compressor and turbine mounted in parallel. As the air flux to the compressor and to the turbine flux are of different gases that cannot mix, there is a turbine (7), that takes energy from the main engine exhaust gas, and a compressor (8) that compresses the engine intake gas. Both are supported on bearings (10) in their respective fixed axes (3) and their housing have external gears (14), that makes the two units to rotate in opposite directions one with respect to the other. Optionally, a belt, toothed or chain belts may be used. The bearing may be rolling bearings, or lubricated sleeves. This system may be used in existing machine systems that tests concepts, so that it can be used later in larger machines. The intake flux and main flow goes straight ahead, without any curves, and the assembly helps the installation of heat exchangers between the intake manifold and the exhaust manifold of engines in general. The use of this equipment is very interesting, as it allows the improvement of the models and a series of another items in an area of equipments with smaller cost and smaller failure impacts. The sealing between the intake tubes or exhaust tubes of the compressor and turbine is similar to present turbo-compressors, and is done with labyrinth, brush, or oil. It is estimated that the efficiencies with the proposed inversion will be closer to the one of nowadays large compressors and turbines, an item that would make it possible a new turbo-compressor scheme with efficiencies closer to similar elements of aeronautics and gas turbines of large size.

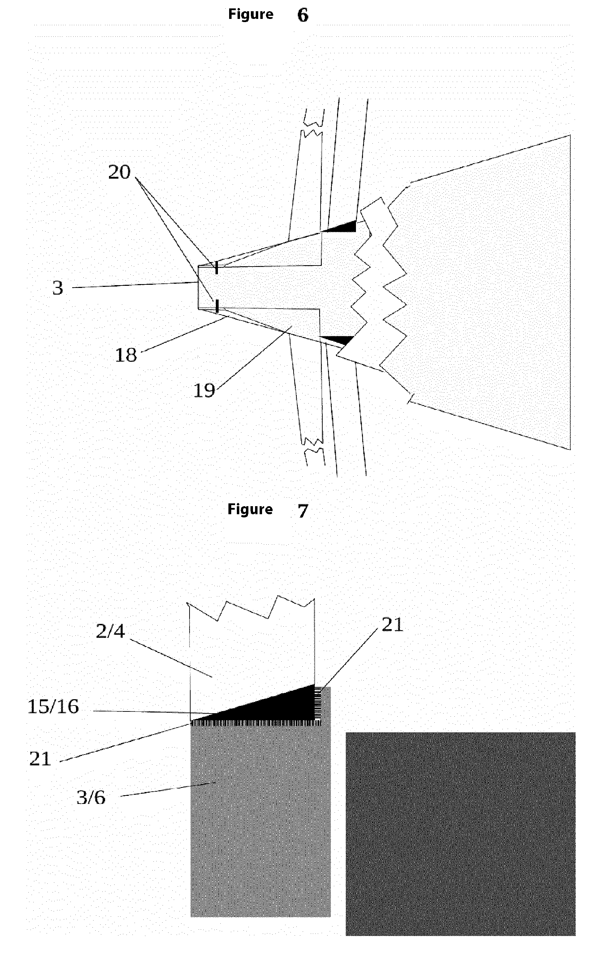

Figures 5 and 6 illustrate the options that use a shroud to improve the sealing at the tip that is opposite to the support of the fixed vanes and moving blades. In these figures it is possible to see fixed vanes (4), moving blades (2), a fixed axis (3), a spinning housing (6), the moving blades, the shroud (15), the fixed vanes shroud (16), the moving blades or fixed vanes supports (17), the locking ring (18) that allows the use of the technology of machine tool grooved clamps at the supports of the blades (17), being them fixed or moving. If the axis has various diameters and the maximum diameter at the row with the least housing diameter, and the housing and the vane rings have proper cylindrical seats, rings can be installed in the moving blades internal zones without problems, assembling first the elements of smaller size that do not have contact with the axis, and this elements will be such that the moving blades rings internal diameters and the external diameters for the fixed blades are coincident, what reduces even more any parasite flow, specially if a labyrinth gasket is used between the fixed vanes ring and the fixed axis. The rings have a clearance relative to the axis or spinning housing, while the supports operate as if in lathe clamps, gripping internally or externally to its clamping element, the spinning housing (6) or the fixed axis (3), as soon it gets a proper axial load and then eliminating any gap, they touch the flanks of the axis or spinning housing and, in addition, as they are compressed unto the axis. Contracting clamps, if they are conical, take advantage of the radial projection of a force to force the contraction and a grip to the diameter. Expanding clamps have something forcing the expansion of the gap and, due to the external diameter, they also fit to the housing in the diameter. To assure the contact surface in the direction of the seating created by an abrupt diameter change of the axis or the housing in the proposed system, all the radial force is generated by the locking rings themselves. One way to force the expansion is by tapering of the clamping rings that generate enough outward forces even though there are axial and conical zones forces. Threaded locking rings, in figure 6 from the axis and similar ones from the housing, make it difficult for any gas to flow and, they also have the possibility of having a thread diameter different of the fixed axis (3) or spinning housing (6) interface diameter, in a way they assure the sealing by means of direct contact of the side of a vane or blade holder (19) with the side of a locking ring (18). Notice that if the gaps of the clamp are not only in different positions where there are any blade or vane root, but equidistant to successive blades or vanes, they do not have a meaningful impact in the performance, even though the sealing near the sides is not perfect. To avoid that the locking rings loose themselves either with vibration or with the excessive axial load, transverse locking elements (20) may be used with a regular angular tangential spacing to lock the system. Such elements may be helicoil^{®} bolts sets inside a thread, bolts in threads with adhesives, keys, cotter pin, elements of cut and folded sheet that fit inside grooves, as well as extensions of locking washers that, when folded, precludes the rotation of the bolt heads or nut, and bounded in another position, precludes the washer rotation with reference to the mechanical part that, in the case, may touch shoulders in more than one part. Small cut sheets may enter inside grooves and, folded in many points, they will not have means to get out without reversing the foldings, since these foldings are able to restrict all their degrees of freedom with the help of the groove friction, they now are efficient means to retain the locking rings (18). Due to the large numbers of locking options, and the fact that these options are well known, we will not detail with these options anymore. If lubricating oil is in the gaps, something easy to do in the compressor, that works colder than the turbine, there is an increase in friction, but practically the seal is absolute, and the surface tension forces are more than enough to assure a low oil consumption, that may evaporate and thus need to be replaced. Blowing a gas of another origin in this gap, the tendency of the gas to escape keeps that part of the turbo-machine main flow from deviating and it penetrates in the corresponding clearance and, in special, if this extra flow reachs friction blockage in the gap (to the definition of the blockage term see Shapiro - Compresssible flow), the general flow is completely blocked and, in terms of flow analysis, it is possible to ignore most of the gap, remaining only the need to analyze the local recirculation between the injection zone and the main flow interface, that in this type of solution uses the injection direction to assure the injected gas to flow parallel to the main flow outside the gap. In the turbine, since it receives hot gases, it is necessary some care with what to fill in these gaps, but if this option is used, as it is known, turbines are more tolerant to gaps than compressors. The gas entering in these gaps does not deliver energy to the blades of the expansion turbine. The blockage is advantageous whenever the energy needed to promote it and the perturbation losses they cause are smaller than the losses of a system without blockage, and also the global efficiency of the system bigger than with other options. The shrouds tend to reduce the propagation of the blockage perturbations that eventually happen between them and the neighboring wall, also because they move the perturbation source away from the blades and vanes. Notice that an extra stage of compression, made with ancillary systems as a turbo-compressor as shown in figure 4, or an extra stage of expansion with a small flow rate, is necessary to assure the blockage gas. In special the extra compression stage may pass the gas through the axis to cool it.

Occasionally, according to figure 7, wich has exaggerated gaps to facilitate the illustration of the concept, may use bristle or special fabrics (21) to reduce the parasite flows in the gaps between the fixed vanes or moving blades shrouds and their neighboring elements that have relative movement relative to them, in special, these bristles may be of variable section, staggered as detailed latter. Bristles (21) from sealing brushes, may be placed to seal the radial gaps between the fixed blades shrouds (16) or the moving blades shrouds (15), the spinning housing (6) or fixed axis (3), as well as to seal the axial gaps with the flank of the next shoulder, an item not mentioned in any patent, to reduce even more the flow rates in the clearance zones. The bristles may be aligned, in quincunx (staggered rows) or may have random arrangements. The quincunx increase the pressure loss but has a bigger chance of mutual mechanical iteration (bristles), and scratch one of the surfaces. In general, pressed bristles stay in quincunx. Bristles pressed and temporary bonded with polymers, the set cut in several layers, and the several cuts may have a superficial layer of polymer that is removed by any process and receives by electroplating or vapor deposition a heat resistant metal. The deposited layer may be machined and after the polymer is removed, one has a fabric or part with bristles normal to their surface. The bristles in some conventional turbines are free in one side, and have flexibility to avoid damage to the moving blades in their intermittent contact with them, sealing the space between the moving blades and other elements. It is possible to use this kind of solution, if desired in the turbine engine here proposed. This time attached to the spinning housing (6) or the axis (3) they restrict the flow between these elements and the moving blades and fixed vanes shrouds (15) or (16). In some kinds of assemblies these bristles may have very thin diameters, and microscopic height. To the turbines it is critical due to their temperature, they may, as an example, be made by carbonation of polymer microfibers and protected with a metallic film, with a similar process applied to the bristles binding system. There are options of making ceramic bristles with coatings, with a stable core with relation to oxidation, but harder than the base material. Bristles attached to membranes may be attached to the spinning housing or the fixed axis by point welding or by electrolytic welding. Metallic filaments of 7 to 10 µm of diameter may be done with a jet of a metal salt inside a reducing solution with the use of a spinneret, or with a jet of the salt solution in a reducing atmosphere with other techniques, the creep temperature of the filament metal being the critical question in this case. In the entrance compressor, since it is cooler, it is possible to use any process of traditional polymeric bristles applied to polymers that resist the working temperature. Traditional bristles, tend to increase the clearance by being installed in grooves, but they do drop the parasite flow rate. Microbristles tend to have the fixation of their metalic film by point welding an this is a critical task.

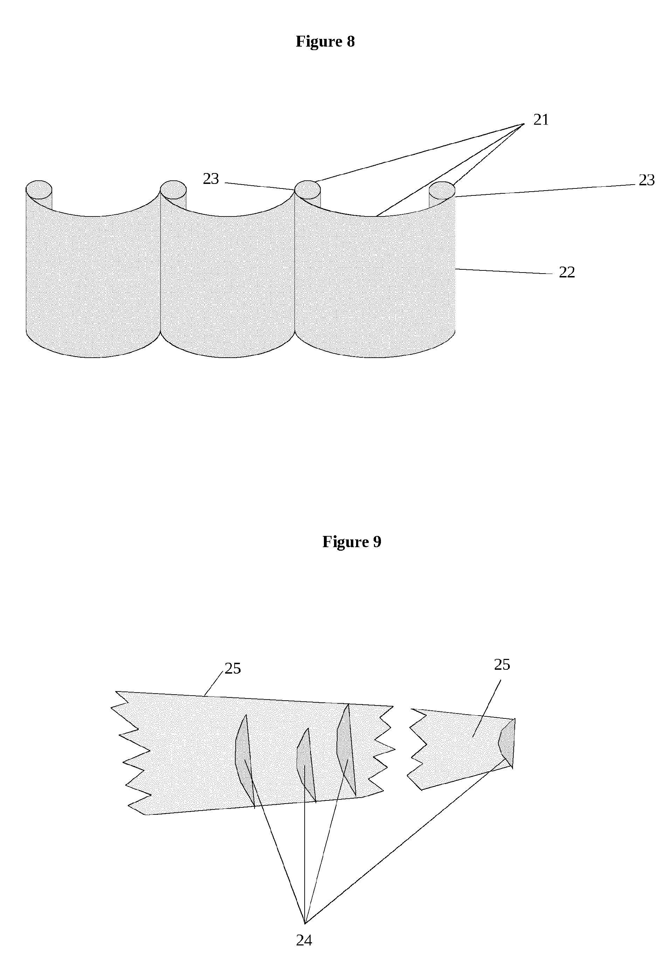

A constant cross section ribbon will show a flexural rigidity far greater in the plane orthogonal to its smaller dimension than in the direction of its smaller dimension. But a cylindrical bristle have equal rigidity in all directions. If the ribbon is similar to two bristles joined by an ideal membrane, without flexural rigidity, this element would be a much better seal and would keep the properties of a pair of traditional bristles. This way bristles (21) of a variable cross width ribbon, as shown in Figure 8, may have an acceptable intermediate behavior if properly designed, for example being made of very thin sheets, with turned tips with processes that are similar with the one used to canning fabrication and point welding, or done with filaments and sheets point welded. When a membrane has a thickness such that it's rigidity is much smaller than the bristles one, and a curvature large enough not to be stretched with the bristles movements, they have a small interference in the bristles movement. Due to that, it is proposed that these bristles have in some sections a membrane zone (22) between two thick zones (23) identical or not, that may be spiral or diffusion welded, electrolytically welded, point welded, round filaments, thickened materials due to the characteristics of the electroplating or vapor deposition molding, and so on, and composed with at least a membrane zone and two thicker zones, being preferably as shown in figure 8, made of more than a membrane and more than a thicker zone to improve the sealing. Pressed, the bristles tend to stagger in such a way the thicker zones of a bristle accommodate themselves in the thinner zone of the other in alternating layers. This joining of bristles by means of very thin curved membranes, generates the freedom for the bristles to move almost as if they were really free, and at the same time the membranes would block the most of the flow between the bristles, independently of they being bigger than the gap and being curved or being slight smaller than the gap. At last, the fabrication techniques with temporary polymer agglutination are similar with the cylindrical or elliptic bristles. This simple sealing concept also did not show up in any turbine patent. There are cases that put membranes over the bristles normal to the axis, but not as here proposed. The fabrication of this type of bristle, by the way, is simple if the cut is the last step taken. Microbristles of this type, may be done with vapor metalization of polymers and by pressing them to make the parallel depressions or groves, for example, where naturally the grooves or depressions will have more material. In the case of pressing, systems with many membranes and thick zones may be done. With this kind of solution, the sealing efficiency increases. This solution was not mentioned in any of the turbine clearance sealing brush patents. The bristles have their nominal plane normal to the axis of the turbine and to the flow. This way, this kind of brush is an option to the zone between the fixed vanes and the spinning housing for small turbines where eventual problems may exist without an efficient sealing of their vanes clearances. In the case the oval form and spring constant induced vibration allows gases to pass, or disturb the flow, these perturbations effects will be smaller if this type of solution is used in the moving blades near the axis, where the clearance area is smaller and where the torque done by the gases in ideal cases is smaller than in external zones, as in conventional turbines. Regarding the fixed vanes, the inefficient sealing implies in a bigger energy loss of the fluid, in a smaller speed reduction, a fact that maybe compensated with vanes with larger chord, or by the friction between the flow and the wall. It should be noted that in the case of using the bristles, they may have oil near to them to improve even more their sealing ability, independently of the type of bristles and of the existence of air passage zones among the many bristles rows. It shall be noticed that the sealing even in this case is not absolute, also due to system vibrations.

Many aircraft propellers, have ribs to reduce the parasite flow that exists between the root and the tip of the blade. These ribs have a similar behavior to the winglets, and flow directors of airplanes wings, that are ribs in the intermediate zones of these wings with ribs planes normal to the nominal plane of the aircraft wing. The use of such ribs in turbine moving blades may be done but will create more balancing difficulties than in normal fixed vanes. If in any blade or vane segment the optional ribs use is adopted to block parasite flow, as shown in figure 9, there is another process to block also the propagation of perturbations created by the tips of any kind of blades of vanes. The ribs (24) either may have a length equal to the blades or vanes chord or have smaller lengths or bigger than this chord. They may literally be placed in a vane or blade tip, as a airplane winglet, or be placed in intermediate positions of blades and vanes. It may be used more than a rib (24) in each blade or vane to increase the restrictions to the parasite flows and the propagation of perturbations, and to reduce the detachment area thanks to the ribs use increasing the turbine operational limit in transients. In special this technique is of interest in the adjustment of the operation of the external zones of the fixed vanes.

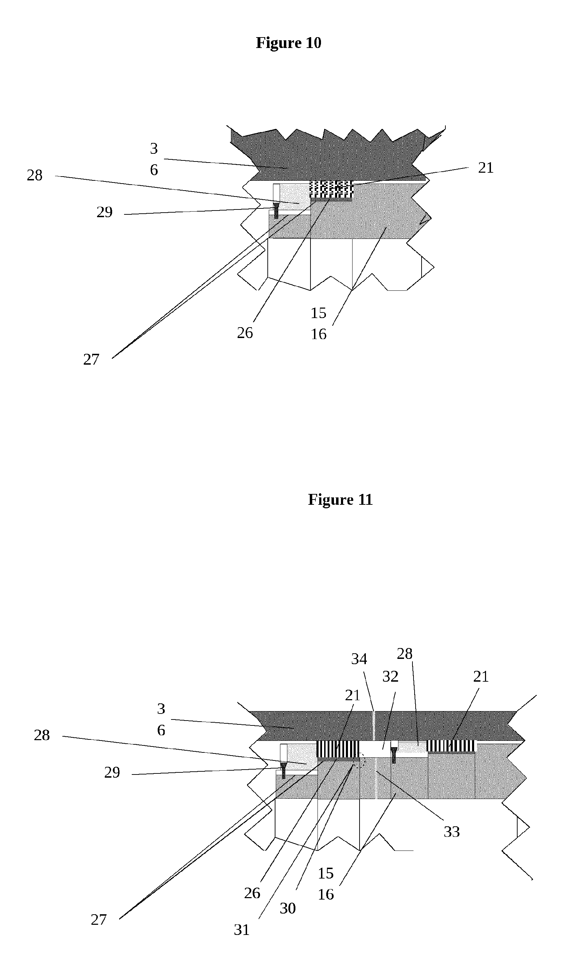

In figure 10, the bristles (21), in brushes, may be mounted in the extremes of the moving blade shrouds (15), or fixed vanes shrouds (16). In the case they are mounted in the two extremes of each type of shroud, they allow even blowing cold ar in this room to make it circulating in cavities of fixed vanes of moving blades, specially in the turbine, to cool it and also to control the clearances by means of cooling. To this mounting the bristles (21) grouped in brushes, are suported by a cylindrical ring of bristle holding (26), external or internal, and seat themselves in recesses (27) of the fixed axis (3) or spinning housing (6). Locking rings (28) are threaded to a segment of proper diameter of the fixed axis (3) or spinning housing (6), and have additional locking devices (29) that may be bolts or pins, placed in ways and other types of zones with removal of material of the locking ring (28). In special, the head of the bolts for this function may have teeth that furrows the washers and this way assure a high locking efficiency, a solution easy to find in books of TRIZ (from theory of inventive problem solving, in Russian). In special, if the bristles used are from the type shown in Figure 8, the sealing level will be very high, and with more than a row of bristles, and more recesses it is possible to establish gas flow zones between these two rows of bristles.

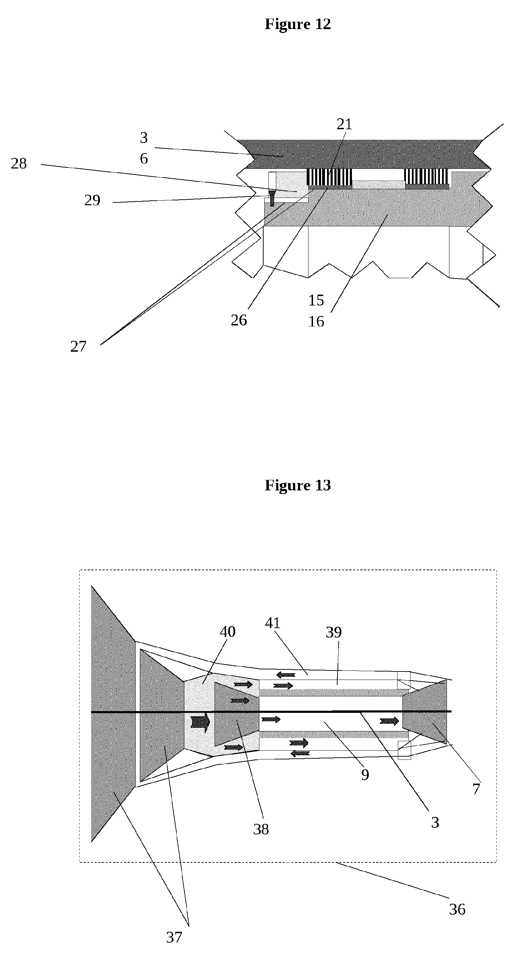

The use of exhaust gas or cold air for clearance control between the fixed vanes and the spinning housing, or between the moving blades and the fixed axis, may be done by means of any available technique, in special with those already in public domain, but now this is less relevant. The use of two sealing rows of the type presented in figures 11 and 12, and preferably with bristles joined with membranes similar to those shown in Figure 8, allow them to set paths for the cooling air flow or burned gases flow through the elements of the compressor or turbine inside a turbine engine. This may be used for differential expansion gas circulation control, as well as to eliminate the mix of cooling air and burned gases. Figure 11, details the elements of two rows, the intermediate plenums with use of more than one shoulder, and channels to the flow in fixed vanes or moving blades. The Portuguese word pleno refers to plenum in English, as a flow distribution element in hydraulic and aerodynamic systems. In figure 12, for smaller plenums it is used a spacer with cooling air or burned gases passing through holes between the rows of bristles, with holes coincident with others of their mounting structures. This way, as in figure 11, it is possible to see a bristle holding a cylindrical ring (26) that is seated in the internal recess (30) of the spinning housing (6) or a fixed axis (3) recess. A second bristle holding cylindrical ring (26) is seated in an external recess (31), the moving blades shrouds (15) or fixed vanes shrouds (16) that are placed join themselves the spinning housing (6) or fixed axis (3). One of this kind of rings and the bristles with or without membranes, that are supported by the two bristle holding cylindrical rings (26), creates a plenum (32) that allows that the gases or the cold air coming from channels in the blades or vanes (due to the fixed position of vanes and blades regarding the rings) meet themselves with the channel in the vanes or blade tips rings (33), that may be in both fixed vanes (4) and moving blades (2), and may flow to the gas or air passing holes (34) that are in the fixed axis (3) or spinning housing (6). Each bristle holding cylindrical ring is fixed by a locking ring (28). In the case of figure 12, the devices are the same, but there are not two recesses, but a spacer with holes or channels (35) that separates the bristle holding cylindrical ring (26), creating a gas distribution room between it, the bristles, and the moving blades shrouds (15) or fixed vanes shrouds (16).

The most interesting point is that without the mix of cooling air and burned gases coming from combustion chamber, the NOx formation is eliminated. Complementing the cooling of the turbine blades, the fixed vanes, with less balancing problems may in thesis be made of ceramic materials more resistant to heat, to the case the use of a expansion stage before the mix of burned gases and cooling air or absence of this mix of cooling air and burned gases. The use of new materials or cooling schemes in the rotating blades is more difficult. But, the raise of the speed and the transformation of part of the temperature in kinetic energy may be enough to assure good working conditions of the moving blades if there is a cooling air flow scheme inside the fixed vanes or moving blades. Actually, many materials have limiting working temperature above the acceptable mixing temperature of burned gases and cooling air and with some additional reduction, it is possible to extend this limit a little more, increasing the efficiency of the turbine. Titanium alloys as lamellar Ti-45Al are able to show creep limits of 300 MPa at 927°C, their maximum service temperature, despite most of titanium alloys do not surpass a 650 °C service temperature, and the simplest alloys not even 350 °C. The alloys of aluminum and nickel, specially the NiAL₃, with addition of other metals, are able tho work in the 100 to 1200 °C zone, and their boron fiber metal-ceramic are able to work at about 1500 °C. The alloys of nickel, aluminum and niobium, and binary with nickel and niobium, also have a high creep temperature. Nickel and cobalt alloys have a good creep limit at 650 °C, the austenitic steels near 540°C as service limit, refractory metals are able to work in the 980 to 1450 °C service temperature range. Niobium and tungsten and even tungsten carbide, have limit temperatures far above other metals and may be the materials of new fixed vanes, mainly with improved clearance control and a higher tolerance to clearances due to the inversion method. Another possible path to the increase of service temperature is the use of metal-ceramic composites. It shall be noted that the metal part temperature is not the gas one. The temperature is the equilibrium temperature between the gas one and cold points to which the part is connected. In special the bigger the end burning pressure, the less tolerant to higher clearance over diameter ratios is the compressor of the turbine engine and, in a smaller degree, this engine turbine. Thus, the inversion of the spinning elements here proposed becomes relevant as it makes the turbo-machines more tolerant to the clearances. So larger temperature variations are allowed, since independently of the use of compensating techniques, it is not possible to avoid an increase in the clearance fluctuations. With higher fluctuations, either the clearances are large in a case or the contact of the parts will happen and contact tolerant mounting shall be used, as for instance the use of brushes, that by their side, may also have problems with a too high clearance variation. In the case of a spinning housing, this housing will be colder once the tangential relative speed of the burned gases relative to its wall is lowered, reducing the heat transfer with the combustion chamber. The tangential speed of the cooling air relative to the wall increases, increasing the heat transfer from the wall with this air for the same temperature. This fact favors the drop in the relative flow rates of cooling air and the air directed to the combustion chamber, increasing the temperature of the gas that enters in the expansion turbine of a single expansion stage turbine, even in systems with more than a stage. The temperature rise increases the thermal efficiency of the turbine engine and this represents a big fuel consumption reduction and reduction of operating costs.

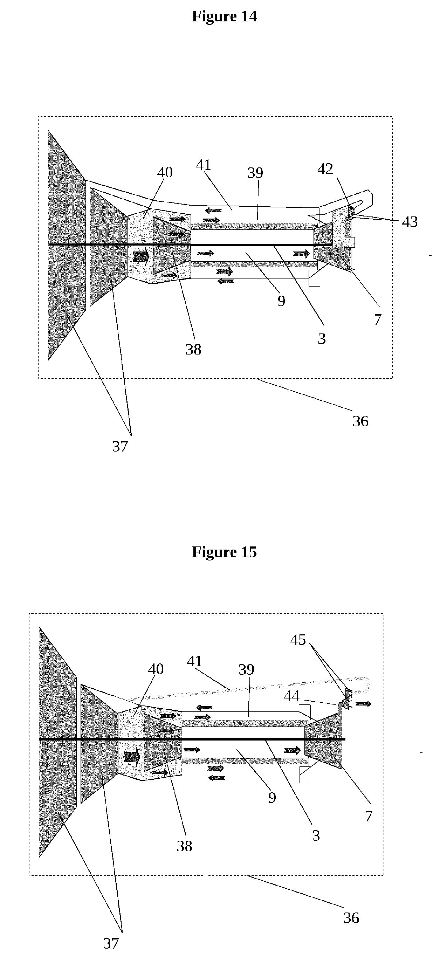

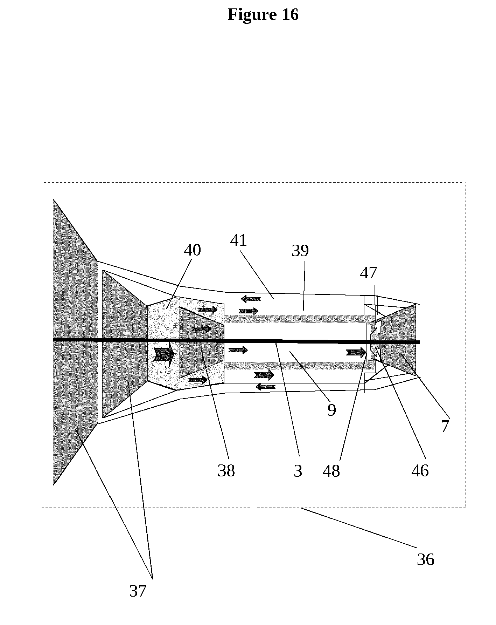

This way, Figure 13, it is possible to have turbine engines (36) with 3 compression stages, where a primary compressor (37) unsegmented process the whole gas flow and a secondary compressor (38) process only the air that goes to the combustion chamber (9), it is possible to bleed the cooling air at the outlet of the primary compressor, to send this gas to the outlet of the secondary compressor to the combustion chamber, mix the fuel, burn it, and expand total or partially these gases in the turbine (7) and send the expanded burned gases to the outlet or, optionally, inject part of the cooling air after a reasonable expansion degree that assure low enough temperatures to block the NOx production and, expand the set to assure a safe discharge temperature. The air that bypasses the combustion chamber, goes to a cooling air jacket (39) and goes back to the primary compressor (37) to a place where the pressure is smaller than that of the bleeding point. The air that enters in the turbine engine pass both levels of compression, but after the first level of compression it is mixed to the whole or part of the cooling air that returns after cooling the combustion chamber and the turbine by passing by turbine blades and vanes internal channels and bristles limited plenums, to suffer a second stage of compression in the primary compressor (37), a compression that overcomes its pressure loss, separating after this the air that goes to the combustion chamber (9) and cooling actions just after the primary compressor, in a part that goes to the combustion chamber (9) after additional compression and another that participates of the cooling. The air separation is done in a flow dividing zone (40). The air that leaves the cooling chamber, goes to cool the turbine blades and vanes, passing inside them, to return by pipes or return sleeves (41) to the primary compressor, where it passes through a compression stage. This way in the proposed technique the whole aspirated flow passes by the combustion chamber, part directly, part after recirculating, and the flux division adjustments at the compressor outlet control the fluxes to the turbine and cooling. If the turbine is small, it is possible to have a single compressor in the entrance of the turbine engine, as shown in figure 14, and use an extra compressor (42) that may have or may not have its own turbine, being coupled with gears to the main turbine, to send back the cooling air to the flux dividing zone (40), through return pipes (41), where the cooling air is separated from the combustion chamber air. In the case of using a small own turbine, figure 15, an auxiliary hot gas pipe (44), and the coupled turbo-compressor set (45) that feeds the return pipe (41). Another option, Figure 16, is having an auxiliary compressor (46) in the turbine region where, after passing the turbine blades and cooling them, the air is compressed by the auxiliary compressor (46) placed just before or just after the turbine with the external spinning wall, bonded to the turbine external wall by a single moving blades stage without clearances in any side (47), with or without ducts and, after the compression, flows back through the axis, to the flux dividing zone (40), cooling the axis. The moving blades without clearance in any side (47) are preceded by a special row of fixed vanes (48). The flow rate regulation for turbine cooling and washing, allows the clearance control and, in the case of the compressor of figure 16, increasing the flow rate in the blades without clearance, or in the case of two compressors similar in the blades without clearance, it is possible to reduce or increase the flow rate in the other blades, controlling the differential expansion. In the 4 cases, of Figures 13, 14, 15 and 16, in the case of need of mixing part of the cooling air to the burned gases during the turbine expansion, optional cold air holes in the turbine blades and vanes, will allow the flow of this air to the points where the pressure is lower than that of the cooling air and the temperature does not allow any more NOx formation. If needed, these holes may have check valves and be placed in the fixed vanes. In the solution shown in figure 13 the return flow of cooling air is completely external, but depending on the cooling requirements and the fixed axis design, it is possible to have a return flow inside the fixed axis (3), or part as an internal flow and part as an external flow. It should be taken in account that in aeronautical systems it is desired to minimize the engine front area, and that may limit the return configuration design and consequently the many options.

The returning cooling air and new fresh air mix in adequate proportions in any device, or the use of pair of these already made mix in the turbine engine entrance, allows one to get the ideal temperature to vaporize the liquid fuels as alcohol, gasoline, GLO and even diesel. In a gas phase in the burning zone, the gas turbine burner technology may be used without distinction for any fuel, only with adjustments of the local flow speed to the flame speed of each air fuel mix by means of the design of the combustion chamber, or the use of auxiliary passages, like the one that easy the start up of turbine engines, to adjust the flow in that region. Is special the auxiliary channels as a control instrument by means of regulating valves of the cooling air and fresh air used to vaporize the fuel, may allow the operation of turbine engines with more than a single fuel, even the effects of the passage channels drops a little the efficiency regarding the fuel to which the turbine was optimized.

The stall problems of turbine engines are more severe exactly in acceleration transients, because other than overcoming steady state pressure differences the compressor shall overcome the extra pressure differential needed to accelerate the gases. Due to that, these moments are critical in conventional turbines. In the case of the family of turbine engines here proposed, characterized by a better stall control, it is expected a better performance in these situations. This has at big impact in the safety of airplanes in lash out and landing maneuvers track design in airports, or in the homologation of aircrafts for short track landing. It also has an impact in the capacity of stationary energy generation turbines to follow the fast load transients. The reduction of these problems generates a greater easiness of control of the secondary air channels, and the margin generated may be used to adjust problems of the flow with the return of the cooling flow easily. In hybrid motor vehicles, the turbine will not have rapid changes in it's operating conditions. But in mechanical traction vehicles and in many machines they will. But, even in hybrid vehicles, the unexpected starts with low amounts of stored energy may now be possible with these new turbines. The turbines with this technology probably have a performance better than the combat fighter planes, where the gaps are brought to a minimum to assure a satisfactory transient performance with the use of much more expensive machining techniques than that used in commercial aircraft turbines of the same size. This increase in maneuver capacity of the aricraft with the proposed turbines, has also impact in airport issues, as the new aircraft may lash out and take off, in the case of aborting lands, in smaller distances.

It is expected to achieve combinations of the solutions proposed in this document, in special the innovation of spinning housing, NOx and relative thermal expansion control and applications of solutions for the reduction of clearances effects of the moving blades or fixed vanes. With or without improvements, as the plane bristles, it is expected to build turbo-compressors, turbines, axial compressors and turbo-machines similar to aeronautical turbines and gas turbines with increased efficiencies, specially those where their size is far below nowadays existing machines. In special, the use of more than a compression stage, with a preliminary expansion in the turbine before mixing with the cooling air and, the use of a higher pressure in the combustion chamber without NOx problems, the efficiency of the turbine is expected to increase substantially. The turbo-compressor set here proposed will be useful to verify the ideas of the proposed invention in less critical systems, as a means to introduce it with increased safety in many turbine engines designs.

It may be noticed that, with the joint rotation of the combustion chamber wall and the turbine and compressor walls in axial turbo-machines, applying this new concept to both aeronautical use as well to the generation of electricity in replacement of traditional gas turbines, the rotation of these elements forces the fuel entrance, gas or liquid, to be close to the fixed axis, or central structure of larger diameter where the fixed vanes are attached. With a larger diameter, eventually, this structure will facilitate not only the fuel flux, but also lubricating and clearance control gases fluxes.

## Claims

1. AXIAL TURBOMACHINES WITH ROTARY HOUSING AND FIXED CENTRAL ELEMENT **characterized by** moving blades (2) of the turbine or compressor attached to a spinning housing (6) as a way to eliminate the clearances of the moving blades (2) in the zones of larger diameter of axial turbines and compressors.

2. Turbo-machine according to claim 1 also **characterized by** walls of expansion turbine (7), compressor (8) and combustion chamber (9) spinning attached one to the other for aeronautical or energy productions uses, independently of the cooling air enclosing wall, called in this document as the external housing (12) is attached to them or is stationary.

3. Turbo-machine to be used in the place of turbochargers of internal combustion engines according to claim 1, also **characterized by** compressor external spinning walls and turbine external spinning walls not co-axial with the the compressor (8) driving turbine (7) with gears, belts, belts with teeths, or chain.

4. Turbo-machine according to claim 1, also **characterized by** shape of the blades and vanes shape adjustment similar to winglets which are nonetheless a type of ribs (24), or ribs (24) use in other places of the blades and vanes that have a high angle in relation to the direction that goes from the blades or vane roots to their tips to contain parasite flows and perturbation propagations that may induce a boundary layer detachment in the fixed vanes of moving blades, or to overcome clearance effects and blades or vanes iteration and flow with the spinning wall or fluid axis surface in order to assure a proper working of the set.

5. Turbo-machine according to claim 2, also **characterized by** shrouds of the fixed vanes (16), preferentially external, or at the moving blades (15), preferentially internal, internal or external recesses (30)/(31) in axis or spinning housing in order to assure a flow without abrupt section changes, eliminating the clearances that are external in the fixed vanes and internal in the moving blades, independently of the presence of labyrinth or bristle systems between the shrouds and fixed axis or spinning housing, bristle brushes, ring shaped membranes, lubricating liquids, forced gas flow, or any other mean of reduction of the amount of gas that is deviated form turbo-machine main flow to the gap between the shroud and the surface of the fixed axis or the spinning housing.

6. Turbo-machine according to claim 2, also **characterized by** use of variations of the cooling air flow or combustion chamber hot gas circulation to control its elements temperatures in function of their relative thermal expansion.

7. Turbo-machine according to claim 6 also **characterized by** the elimination of a mix of cooling air and burned gases in the combustion chamber (9) outlet, by means of the return of the cooling air for mixing with the fresh air that goes to the combustion chamber (9), eventual use of part of this fresh air and cooling air mix to vaporize the liquid fuel and facilitate it's use and also the eventual use of part of the cooling air to control the exhaust temperature by injecting cooling air in turbine (7) intermediate stages, were the temperature of burned gases does not allow NOx formation.

8. Turbo-machine according to claim 2, also **characterized by** the use the bristle brushes (21) circular, elliptic or plane staggered or not, bristles joined by membranes (22) ultra flexible and curved, labyrinth gaskets, shielded bearings or liquid films individually or in combined way to seal eventual assembly between the spinning housing of the combustion chamber, turbine (7) and compressor (8) and external housing (12) of the cooling air, being this latter part fixed or moving.

9. Turbo-machine according to claim 2, also **characterized by** the use of bristles systems tor create plenums (32), parts with holes as channels (33) of the blades or vanes tips, gas passage holes (34) and, passing of the cooling air inside the turbine (7) or compressor (8) blades, in blades or vanes channels, for them to cool.

10. Systems of rib joined bristles for axial turbo-machines, **characterized by** the bristles joined by curved membranes (22) thin enough to cause less movement restrictions than the bristles, enabling freedom for the bristles to move almost as if they were loose, at the same time the membranes blocks the most of the flow between the bristles.
